Europäisches Patentamt

European Patent Office

Office européen des brevets

(19)

(11) Veröffentlichungsnummer: **0 110 011**
**B1**

(12) # EUROPÄISCHE PATENTSCHRIFT

(45) Veröffentlichungstag der Patentschrift: **28.09.88**

(51) Int. Cl.⁴: **B 60 N 1/02**

(21) Anmeldenummer: **83107775.5**

(22) Anmeldetag: **08.08.83**

(54) **Sitzanordnung für ein land- oder bauwirtschaftlich nutzbares Fahrzeug.**

(30) Priorität: **28.10.82 DE 3239895**

(43) Veröffentlichungstag der Anmeldung:
**13.06.84 Patentblatt 84/24**

(45) Bekanntmachung des Hinweises auf die
Patenterteilung:
**28.09.88 Patentblatt 88/39**

(84) Benannte Vertragsstaaten:
**AT BE DE FR IT NL**

(56) Entgegenhaltungen:
**DE-C- 221 055**
**FR-A- 379 561**

(73) Patentinhaber: **Klöckner-Humboldt-Deutz
Aktiengesellschaft
Deutz-Mülheimer-Strasse 111 Postfach 80 05 09
D-5000 Köln 80 (DE)**

(72) Erfinder: **Carstensen, Jes-Ernst, Dipl.-Ing.
Gregor-Vosen Strasse 44
D-5042 Erftstadt (DE)**
Erfinder: **Willmes, Friedrich, Dipl.-Ing.
Bleistrasse 4
D-5042 Erftstadt-Niederberg (DE)**

Courier Press, Leamington Spa, England.

## Beschreibung

Die Erfindung bezieht sich auf eine Sitzanordnung für ein land- oder bauwirtschaftlich nutzbares Fahrzeug, insbesondere mit einer Fahrerkabine, aus dessen Fahrerstandboden ein über eine Sitzkonsole abgefederter Fahrersitz mit Rückenlehne und ein Beifahrersitz angeordnet sind.

Bei einem bekannten landwirtschaftlich nutzbaren Fahrzeug der im Oberbegriff des Anspruchs 1 aufgeführten Gattung (Prospekt "IH Control Center XL", GER 26-K/2) ist innerhalb einer Fahrerkabine eine Werkzeugkiste angeordnet, deren gepolsterter Deckel als Beifahrersitz dient. Diese fest mit dem Fahrerstandboden verbundene Werkzeugkiste befindet sich seitlich versetzt hinter dem Fahrersitz. Neben einem schlechten Sitzkomfort weist diese Art der Anordnung und Ausbildung des Beifahrersitzes den erheblichen Nachteil auf, daß der Beifahrersitz selbst dann, wenn er nicht benutzt wird, viel Platz in der Fahrerkabine beansprucht, die Sicht auf die Geräteanbauvorrichtung des landwirtschaftlichen Fahrzeugs versperrt und die Möglichkeit des Öffnens von einem in diesem Bereich vorgesehenen Kabinenfenster, durch das hindurch die Geräteanbauvorrichtung bedient werden kann, verhindert. Eine auf dem Beifahrersitz sitzende Person versperrt dem Fahrer gänzlich die Sicht auf die Geräteanbauvorrichtung und die daran angehängten Anbaugeräte. Bei einem landwirtschaftlichen Fahrzeug mit einer Rückfahreinrichtung, bei der die gesamte Bedienungseinheit Fahrersitz, Schaltung und Armaturenbrett mit Lenkeinrichtung und Pedalerie um 180° schwenkbar ist, kann ein entsprechend ausgebildeter Beifahrersitz ebenfalls nicht verwendet werden. Außerdem schafft der bekannte beifahrersitz für die auf dem Ackerschlepper mitfahrende Person sowohl während der Fahrt auf der Straße als auch auf dem Acker wegen des Fehlens einer Rückenlehne und der geringen Sitzhöhe ein hohes Verletzungsrisiko bei Unfällen.

Die der Erfindung zugrundeliegende Aufgabe besteht somit darin, die vorstehend beschriebenen Mängel zu beheben, und demzufolge einen bei Nichtgebrauch platzsparend aufzubewahrenden Beifahrersitz zu schaffen, der sowohl eine günstage Sitzposition als auch einen hohen Federungskomfort hat und den im Straßenverkehr allgemein üblichen Sicherheitsvorschriften gerecht wird.

Diese Aufgabe wird an einem land- oder bauwirtschaftlich nutzbaren Fahrzeug der in Rede stehenden Gattung durch die im Kennzeichen des Anspruchs 1 aufgeführten Merkmale gelöst.

Durch die Anordnung des Beifahrersitzes in der Gebrauchsstellung unmittelbar neben dem Fahrersitz ergibt sich eine größtmögliche Übersicht für den Fahrer. Weder der Beifahrer noch der Beifahrersitz behindern den Fahrer bei der Bedienung heckseitig an das landwirtschaftlich nutzbare Fahrzeug angebauter Geräte. Es läßt sich außerdem eine Sitzhöhe für den Beifahrersitz erzielen, die mit der des Fahrersitzes übereinstimmt, so daß sich eine ermüdungsfreie Sitzposition für den Beifahrer ergibt. Da der Beifahrersitz seitlich an den Fahrersitz und an einen der Kotfügel des Fahrzeuges angrenzt, ist die größtmögliche Seitenführung für die mitfahrende Person erzielt. Der größte Vorteil der erfindungsgemäßen Anordnung des Beifahrersitzes liegt in der raumsparenden Aufbewahrung des selben in der Nichtgebrauchsstellung. Mit kostengünstigen Mitteln—zwei in Gebrauchsstellung des Beifahrersitzes horizontalen Schwenklagern—wird der Beifahrersitz in eine Nichtgebrauchsstellung überführt, in der er parallel zur Rückenlehne des Fahrersitzes hinter dieser liegt. Der Beifahrersitz beansprucht in dieser Position wenig Platz und behindert den Fahrer weder in seiner Sicht noch bei der Bedienung des Fahrzeuges oder beim Einstieg in die Kabine des Fahrzeugs. Ist das Fahrzeug mit einer sogenannten Rückfahreinrichtung ausgerüstet, so wird der Beifahrersitz beim Schwenken der gesamten Bedienungseinrichtung um 180° zusammen mit dem Fahrersitz verschwenkt und weist auch in dieser neuen Stellung des Fahrersitzes sämtliche beschriebene Vorteile auf. Da der Beifahrersitz in der Nichtgebrauchsstellung hinter die Rückenlehne des Fahrersitzes geschwenkt ist, kann der Fahrer, der die Fahrerkabine durch einen vorderen Einstieg betritt, in der Rückwärtsfahrstellung der vorgenannten Einrichtung ohne Behinderung zum Fahrersitz gelangen.

In weiterer Ausgestaltung der Erfindung wird vorgeschlagen, das Schwenklager in einem Bereich an der Sitzkonsole zu befestigen, in dem diese gegenüber dem Fahrer standboden abgefedert ist. Auf diese Weise läßt sich der Federungskomfort des normalen Fahrersitzes ohne aufwendige Maßnahmen ausnutzen. Hierbei kann die an der hinteren Ecke des Fahrersitzes schwenkbar gelagerte Sitzplatte sich auf einer sich in Fahrzeuglängsrichtung erstreckenden Auflage, die an der Sitzkontrole befestigt ist, aufliegen. Es besteht allerdings auch die Möglichkeit, und der Sitzkonsole einen ausschwenkbaren oder ausziehbaren Arm vorzusehen, die die Stizplatte zur Abstützung untergreift. Zusätzlich zu der beschriebenen Auflage kann ein elastisches Stützelement vorgesehen sein, das längenveränderbar ist und über das sich die Sitzplatte auf dem Fahrerstandboden oder am benachbarten Kotflügel abstützt.

Eine vorteilhafte Ausgestaltung der Erfindung sieht vor, an der Rückseite der Rückenlehne eine Aufnahmevorrichtung zur Festlegung des Beifahrersitzes in seiner Nichtgebrauchstellung anzuordnen. Diese Aufnahmevorrichtung kann als Bügel ausgebildet sein, der die Rückseite der Fahrersitzrückenlehne mit einem Abstand überragt, hinter den der Beifahrersitz in der Nichtgebrauchsstellung geschoben wird.

Weiterhin ist zur Erhöhung des Sitzkomforts und der Sicherheit vorgesehen, an der Sitzplatte eine einklappbare Rückenstütze vorzusehen, die in der Nichtgebrauchsstellung des Beifahrersitzes auf dessen Sitzfläche geklappt ist und von der Aufnahmevorrichtung in dieser Stellung gehalten wird. Ebenfalls zur Erhöhung der Sicherheit dient eine teils an der Sitzplatte und teils an der Sitzkonsole befestigter Beckengurt. Am Schwenklager läßt sich außerdem eine Vorrichtung anordnen, die beim Verschwenken des Beifahrersitzes in seine Gebrauchsstellung die Federvorspannung des Fahrersitzes erhöht. Auf diese Weise wird das Federungssytem des Fahrersitzes ohne manuelle Verstellung direkt auf das Gewicht zweier Personen umgestellt. Eine entsprechende Vorrichtung kann ohne großen Aufwand an hydraulisch oder pneumatisch abgefederten Fahrersitzen angebracht werden.

Zur weiteren Erläuterung der Erfindung wird auf die Zeichnung verwiesen, in der ein Ausführungsbeispiel vereinfacht dargestellt ist.

Es zeigen:

Fig. 1 eine rückwärtige Ansicht eines Fahrersitzes, an dessen Sitzkonsole ein in Gebrauchsstellung befindlicher Beifahrersitz befestigt ist,

Fig. 2 eine Vorderansicht des Fahrersitzes mit darin befestigtem Beifahrersitz gemäß Fig. 1, und

Fig. 3 ein Schwenklager zur schwenkbaren Befestigung einer Sitzplatte eines Beifahrersitzes an einem Fahrersitz.

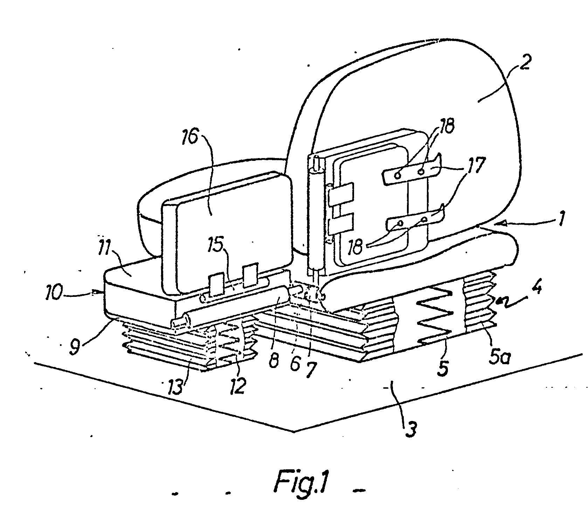

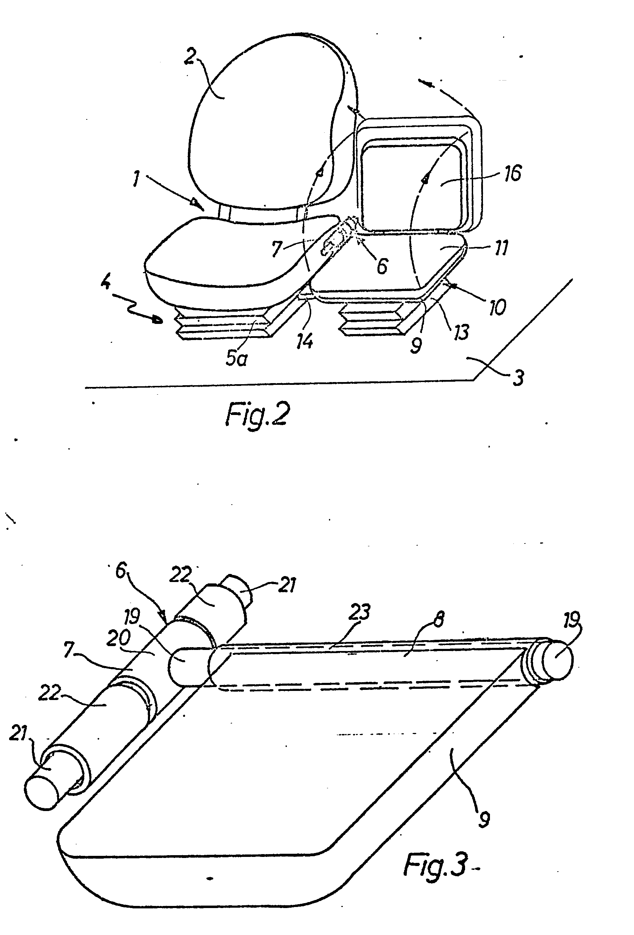

In den Fig. 1 und 2 ist mit 1 eine Fahrersitz bezeichnet, der eine Rückenlehne 2 aufweist, Dieser Fahrersitz 1 ist an einer Stizkonsole 4 befestigt, die über eine Fahrersitzfederung 5 auf einem angedeuteten Fahrerstandboden 3 abgefedert ist. Hierbei ist die Fahrersitzfederung 5 mittels einer faltenbalgartigen Abdeckung 5a verkleidet. Der Fahrersitz 1 läßt sich über eine nicht näher dargestellte Einrichtung in seiner Höhe verstellen und in Längsrichtung des Fahrzeugs verschieben. An der Sitzkonsole 4 ist im Bereich der hinteren Ecke ein Schwenklager 6 befestigt. Dieses Schwenklager 6 hat eine erste horizontale, in Fahrtrichtung liegende Schwenkachse 7 und eine zweite horizontale, quer zur Fahrtrichtung liegende Schwenkachse 8. Der Aufbau dieser beiden Schwenkachsen 7 und 8 wird im Zusammenhang mit der Fig. 3 näher erläutert werden. Weiterhin ist an dem Schwenklager 6 eine Sitzplatte 9 eines Beifahrersitzes 10 befestigt, wobei auf der Sitzplatte 9 ein Sitzkissen 11 angeordnet ist. Wie insbesondere aus der Fig. 1 hervorgeht, ist die am Schwenklager 6 befestigte Sitzplatte 9 mit einer Beifahrersitzfederung 12, die eine faltenbalgartige Ummantelung 13 hat, auf dem Fahrerstandboden 3 abgefedert. Der Fig. 2 ist zu entnehmen, daß die Sitzplatte 9 sich in ihrer Gebrauchsstellung an einer ihrer sich in Fahrzeuglängsrichtung erstreckenden Kanten an einer Auflage 14 der Sitzkonsole abstütz. An der Sitzplatte 9 ist über ein Scharnier 15 eine Rückenstütze 16 derart befestigt, daß sie durch Schwenken um 90° mit dem Sitzkissen 11 zur Anlage gebracht werden kann oder eine aufrechte Position einnimmt.

In der Fig. 1 ist der Beifahrersitz 10 in seiner eingeschwenkten Nichtgebrauchsstellung mit dünneren Linien dargestellt. Der Beifahrersitz 10 wird gemäß Fig. 2 zunächst mittels des Schwenklagers 6 um die horizontale, quer zur Fahrtrichtung liegende Schwenkachse 8 hochgeklappt und anschließend um die horizontale in Fahrtrichtung liegende Schwenkachse 7 hinter die Rückenlehne 2 Fahrersitzes 1 eingeschwenkt. An der Rückseite der Rückenlehne 2 befindet sich eine Aufnahmeeinrichtung 17, die den gesamten Beifahrersitz 10 in dieser Nichtgebrauchsstellung hält. Außerdem ist an der Aufnahmevorrichtung 17 eine Sperreinrichtung 18 vorgesehen, mittels der ein ungewolltes Zurücksschwenken des Beifahrersitzes verhindert wird.

Anhand der Fig. 3 soll nachfolden der Aufbau des Scwenklagers näher erläutert werden:

Das Schwenklager 6 besteht danach aus einem Wellenstück 19 und einem T-förmig daran angefügten Rohrstück 20. Das Rohrstück 20 ist dabei wiederum auf einer Welle 21 gelagert, welche mittels zweier Lagerbuchsen 22 an der Sitzkonsole 4 des Fahrersitzes 1 befestigbar ist. Auf dem Wellenstück 19 ist eine weitere Hülse 23 befestigt, die mit der Sitzplatte 9 des Beifahrersitzes 10 verbunden ist.

Den Fig. kann entnommen werden, daß sich mit dem erfindungsgemäßen Ausgestaltungsbeispiel des hinter die Rückenlehne 2 des Fahrersitzes 1 einschwenkbaren Beifahrersitzes 10 eine Vielzahl von Vorteilen, die eingangs beschrieben wurden, erzielen lassen. Hierzu gehört der geringe Bauaufwand für diese Vorrichtung, die raumsparende Aufbewahrung des Beifahrersitzes 10 sowie eine Erhöhung des Stizkomforts und der Sicherheit für die mitfahrende Person.

**Patentansprüche**

1. Sitzanordnung für eine land- oder bauwirtschaftlich nutzbares Fahrzeug, insbesondere mit einer Fahrerkabine, auf dessen Fahrerstandboden (3) ein über eine Stizkonsole (4) abgefederter Fahrersitz (1) mit Rückenlehne (2) und ein Beifahrersitz (10) angeordnet sind, dadurch gekennzeichnet, daß eine Sitzplatte (9) des beifahrersitzes (10) über ein Schwenklager (6) an der Sitzkonsole (4) des Fahrersitzes im Bereich einer der hinteren Ecken befestigt ist, wobei das Schwenklager (6) eine erste horizontale, in Fahrtrichtung und eine zweite horizontale, quer zur Fahrtrichtung liegende Schwenkachse (7 bzw. 8) aufweist, so daß die Sitzplatte (9) in einer Gebrauchstellung neben dem Fahrersitz (1) liegt und in einer Nichtgebrauchstellung parallel zur Rückenlehne (2) des Fahrersitzes (1) hinter dieselbe schwenkbar ist.

2. Sitzanordnung für ein land- oder bauwirtschaftliches Fahrzeug nach Anspruch 1, dadurch gekennzeichnet, daß das Schwenklager (6) in einem Bereich an der Sitzkonsole (4) befestigt ist, in dem diese gegenüber dem Fahrerstandboden (3) abgefedert ist.

3. Sitzanordnung für ein land- oder bauwirtschaftliches Fahrzeug nach einem der vorhergehenden Ansprüche, dadurch gekennzeichnet, daß die Sitzplatte (9) des Beifahrersitzes (10) in ihrer Gebrauchstellung an einer ihrer sich in Fahrzeuglängsrichtung erstreckenden Kanten an der Sitzkonsole (4) festlegbar ist, während der übrige Teil der Sitzplatte (9) über zumindest ein, vorzugsweise längenveränderliches, elastisches Stützelement (Beifahrersitzfederung 12) am Fahrerstandboden (3) abstützbar ist.

4. Sitzanordnung für ein land- oder bauwirtschaftliches Fahrzeug nach einem der vorhergehenden Ansprüche, dadurch gekennzeichnet, daß an der Rückseite der Rückenlehne (2) eine Aufnahmevorrichtung (17) zur Festlegung des Beifahrersitzes (10) in seiner Nichtgebrauchstellung vorgesehen ist.

5. Sitzanordnung für ein land- oder bauwirtschaftliches Fahrzeug nach einem der vorhergehenden Ansprüche, dadurch gekennzeichnet, daß an der hinteren Begrenzungen der Sitzplatte (9) eine einklappbare Rückenstütze (16) angeordnet ist.

6. Sitzanordnung für ein land- oder bauwirtschaftliches Fahrzeug nach einem der vorhergehenden Ansprüche, dadurch gekennzeichnet, daß an der Sitzplatte (9) ein Beckengurt, sowie an der Sitzkonsole (4) oder der Sitzplatte (9) ein damit kuppelbares Gurtschloß angeordnet sind.

7. Sitzanordnung für ein land- oder bauwirtschaft liches Fahrzeug nach einem der vorhergehenden Ansprüche, dadurch gekennzeichnet, daß das Schwenklager (6) mit einer die Federvorspannung des Fahrersitzes (1) in Gebrauchsstellung des Beifahrersitzes (10) erhöhenden Verstellvorrichtung in Verbindung steht.

**Revendications**

1. Amènagement de siège pour véhicule utilisable dans l'agriculture ou l'industrie du bâtiment, en particulier avec une cabine de conducteur, sur le plancher du conducteur (3) de laquelle sont disposés un siège de conducteur (1) suspendu par une console de siège (4), avec un dossier (2) et un siège de passager (10), caractérisé en ce qu'une plaque de siège (9) du siège de passager (10) est fixée à la console de siège (4) du siège du conducteur, par un support pivotant (6), dans la zone du coin arrière, le support pivotant (6) possédant à cette occasion un premier axe horizontal de pivotement, situé dans la direction de la marche et un deuxième axe horizontal de pivotement, situé transversalement par rapport à la direction de la marche (7, respectivement 8), de telle sorte que la plaque de siège (6) se trouve à côté du siège du conducteur (1), dans une position d'utilisation et derrière celui-ci et parallèlement au dossier (2) du siège de conducteur, dans une position de non utilisation.

2. Aménagement de siège pour véhicule utilisable dans l'agriculture ou l'industrie du bâtiment selon la revendication 1, caractérisé en ce que le support pivotant (6) est fixé à la console de siège (4), en une zone où celle-ci est suspendue par rapport au plancher du conducteur (3).

3. Aménagement de siège pour véhicule utilisable dans l'agriculture ou l'industrie du bâtiment, selon une des revendications précédentes, caractérisé en ce que la plaque de siège (9) du siège du passager (10) peut être fixée dans la position d'utilisation par l'une de ses arêtes, qui s'étend dans la direction longitudinale du véhicule, sur la console de siège (4), pendant que la partie restante de la plaque de siège (9) peut être appuyée sur au moins un élément élastique, avantageusement modifiable en longueur (suspension du siège du passager 12), sur le plancher du conducteur (3).

4. Aménagement de siège pour véhicule utilisable dans l'agriculture ou l'industrie du bâtiment, selon une des revendications précédentes, caractérisé en ce qu'un dispositif de réception (17), pour la fixation du siège du passager (10), dans sa position de non utilisation, est prévu au dos du dossier (2).

5. Aménagement de siège pour véhicule utilisable dans l'agriculture ou l'industrie du bâtiment, selon une des revendications précédentes, caractérisé en ce qu'un dosseret (16) escamotable est disposé sur les limites arrières de la plaque de siège (9).

6. Aménagement de siège pour véhicule utilisable dans l'agriculture ou l'industrie du bâtiment, selon une des revendications précédentes, caractérisé en ce qu'une ceinture de bassin est disposée sur la plaque de siège (9), ainsi qu'est disposée une serrure de ceinture accouplable sur la console de siège (4), ou bien la plaque de siège (9).

7. Aménagement de siège pour véhicule utilisable dans l'agriculture ou l'industrie du bâtiment, selon une des revendications précédentes, caractérisé en ce que le support pivotant (6) est relié à un dispositif de réglage augmentant la précontrainte du ressort du siège du conducteur (1) en position d'utilisation du siège du passager (10).

**Claims**

1. A seating arrangement for a vehicle utilizable in the agricultural or building industry, especially one equipped with a driver's cab, on the floor (3) of which a driver's seat (1)—spring-mounted thereon *via* a seat bracket (4)—including a back rest (2) and also a passenger seat (10) are arranged, characterized in that a seat base (9) for the passenger seat (10) is secured by means of a swivel bearing (6) to the seat bracket (4) of the driver's seat in the region of one of the bracket's rear corners, and in that the swivel bearing (6) includes a first horizontal swivel axis (7) extending along the driving direction and a second horizontal swivel axis (8) extending transversely to the driving direction, so that the seat base (9) in its position of use is located adjacent the driver's seat (1) but, if not required to be used, is swivable into a position parallel with and behind the back rest (2) of the driver's seat (1).

2. A seating arrangement for a vehicle utilizable in the agricultural or building industry according to claim 1, characterized in that the swivel bearing (6) is secured to the seat bracket (4) in a region thereof which is spring-mounted on the floor (3).

3. A seating arrangement for a vehicle utilizable in the agricultural or building industry according to claim 1 or claim 2, characterized in that the seat base (9) of the passenger seat (10) is securable in its position of use by locking one of its edges extending along the vehicle's longitudinal direction to the seat bracket (4), and in that the remaining part of the seat base (9) is arranged to be supported on the floor (3) by at least one elastic suporting member (an elastic support (12) for the passenger seat) which, preferably, is length-adjustable.

4. A seating arrangement for a vehicle utilizable in the agricultural or building industry according to any of the preceding claims, characterized in that a retaining device (17) for locking the passenger seat (10) in its out-of-use position is arranged on the rear face of the back rest (2).

5. A seating arrangement for a vehicle utilizable in the agricultural or building industry according to any of the preceding claims, characterized in that a hinged back support (16) is arranged on the rear face of a seat base (9).

6. A seating arrangement for a vehicle utilizable in the agricultural or building industry according to any of the preceding claims, characterized in that a safety belt placeable across the pelvis is arranged on the seat base (9), and a belt locking mechanism engageable by said belt is arranged on either the seat bracket (4) or on the seat base (9).

7. A seating arrangement for a vehicle utilizable in the agricultural or building industry according to any of the preceding claims, characterized in that the swivel bearing (6) communicates with an adjusting device serving to increase, when the passenger seat (10) has been swivelled into its position of use, the spring bias acting on the driver's seat (1).

*Fig.1*

1

Fig.2

Fig.3